# FASCICULE DE BREVET EUROPEEN

(11) **EP 0 479 227 B1**
(45) Date de publication et mention de la délivrance du brevet: **22.05.1996**
(21) Numéro de dépôt: 91116753.4
(22) Date de dépôt: 01.10.1991
(51) Int. Cl.: G02B 6/44

(54) **Dispositif de montage et de fixation de modules unitaires sur un support de maintien**
Vorrichtung zur Montage und Befestigung von einzelnen Modulen auf einem Halterahmen
Device for fixing and mounting unitary modules on a supporting frame

(30) Priorité: 04.10.1990 FR 9012244
(43) Date de publication de la demande: 08.04.1992
(73) Titulaire: ALCATEL CABLE INTERFACE, F-08330 Vrigne aux Bois (FR)
(72) Inventeur: Dupont, Michel, F-08410 Boulzicourt (FR); Boyer, Jean-Pierre, F-75015 Paris (FR)
(74) Mandataire: Weinmiller, Jürgen

(56) Documents cités:
- EP-A- 0 208 155

## Description

La présente invention porte sur un module unitaire équipé d'un dispositif de montage et de fixation dudit module unitaire sur un support de maintien de type rail linéaire ou rail en U.

De manière courante, le dispositif de montage et de fixation de modules unitaires sur un rail est constitué par une paire de pattes élastiques d'encliquetage prévues sur une face dite arrière de fixation de chacun des modules. Cette paire de pattes est adaptée au type de rail recevant les modules, pour venir s'encliqueter sur les bords du rail linéaire ou dans des encoches des branches du rail en U.

Le document EP-A 0 208 155 décrit un bloc de jonction pour fibres optiques, comportant deux pieds élastiques saillants sur l'une des petites faces du bloc pour sa fixation sur un rail en U. Ces pieds ont une encoche en vis-à-vis et reçoivent entre eux le rail en U, les extrémités du rail étant repliées vers l'extérieur du U et reçues dans les encoches en vis-à-vis des deux pieds.

La présente invention a pour but de permettre le montage et la fixation de modules unitaires aussi bien sur un rail linéaire ou que sur un rail en U.

Elle a pour objet un module unitaire équipé d'un dispositif de montage et de fixation dudit module sur un support de maintien, ledit support de maintien pouvant indifféremment être d'un premier type, formé par un rail en U à deux branches comportant des encoches régulièrement réparties sur leur longueur, ou d'un deuxième type formé par un rail rectiligne, ledit dispositif comportant au moins une paire de pattes élastiques d'encliquetage faisant saillie en regard et à distance l'une de l'autre sur une face dudit module dite arrière de fixation, caractérisé en ce que ledit dispositif comporte plusieurs paires de pattes élastiques d'encliquetage, lesdites paires étant situées chacune à un niveau différent sur la face arrière du module et constituant un premier jeu et un deuxième jeu de pattes individuelles d'encliquetage superposées dans chaque jeu et en vis-à-vis deux à deux de l'un des jeux à l'autre, chacune des pattes d'encliquetage de chacun des deux jeux ayant une dent terminale intérieure tournée vers la patte d'encliquetage de même niveau de l'autre jeu, et les pattes d'encliquetage d'un même jeu ayant entre elles un pas égal à un sous multiple du pas entre les encoches dudit support de maintien du premier type formé par un rail en U, et en ce que ledit dispositif comporte en outre deux pattes rigides intérieures faisant saillie sur ladite face arrière entre lesdits deux jeux de pattes d'encliquetage, sur la hauteur de ces deux jeux et respectivement associées à l'un et l'autre de ces deux jeux pour le montage éventuel dudit module sur ledit support de maintien du deuxième type formé par un rail rectiligne.

Selon une caractéristique additionnelle dudit dispositif, lesdites pattes d'encliquetage comportent en outre chacune une excroissance extérieure dite levier d'actionnement de la patte d'encliquetage qui la porte.

Avantageusement ledit dispositif comporte, en outre, deux excroissances supplémentaires, s'étendant saillantes sur ladite face arrière de fixation sur l'extérieur des deux jeux de pattes d'encliquetage, respectivement, et sensiblement en regard de l'une des pattes d'encliquetage terminales de chaque jeu, constituant un moyen de guidage en aveugle d'actionnement au doigt des seules pattes d'encliquetage de ce module, pour l'opérateur, pour l'extraction de ce seul module d'un empilement de modules sur ledit support de maintien.

Les caractéristiques et avantages de la présente invention apparaîtront clairement au cours de la description détaillée faite ci-après d'un mode préféré de réalisation donné à titre d'exemple et illustré dans les dessins ci-annexés. Dans ces dessins :
- la figure 1 et la figure 2 sont deux vues schématiques en perspective montrant un module unitaire maintenu respectivement sur un rail en U et un rail linéaire, conformément à la présente invention,
- la figure 3 est une vue de dessus de ce module unitaire, et
- la figure 4 est une vue de sa face arrière équipée du dispositif de montage et de fixation de ce module.

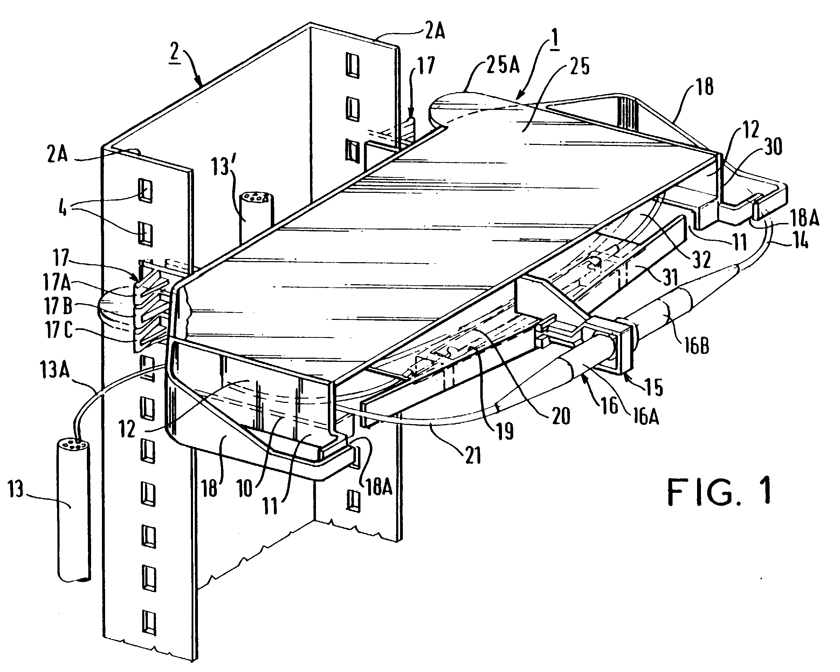

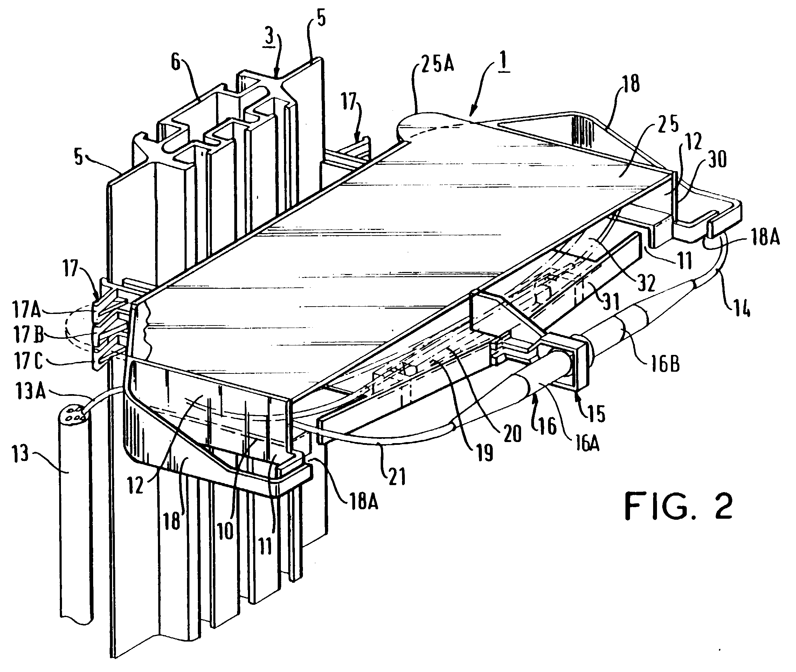

Le module unitaire illustré dans les figures 1 à 4 est désigné globalement par la référence 1. Il est monté horizontalement indifféremment sur une ferme 2 constituée par un rail en U ou sur une ferme 3 constitué par un rail linéaire, comme respectivement représenté dans les figures 1 et 2. Il peut tout aussi bien être monté verticalement sur la ferme 2 ou 3 alors horizontale.

Sur l'une ou l'autre des fermes 2 et 3, le seul module 1 représenté et d'autres modules qui lui sont identiques sont maintenus individuellement en formant ensemble un empilement de modules les uns contre les autres.

Dans l'exemple illustré, ce module 1 est une cassette de raccordement optique. Cette cassette est à double compartiment 11 et 12, définis de part et d'autre d'une toile horizontale de séparation 10, sensiblement médiane. Le compartiment inférieur 11 est affecté au stockage d'une réserve de longueur d'un conducteur 13A de câble 13. Le compartiment supérieur 12 est affecté au stockage d'une réserve de longueur d'un conducteur jarretière 14 à raccorder au conducteur 13A.

Cette cassette 1 reçoit un élément support 15 pour un connecteur 16, sur sa face avant. Elle comporte sur sa face arrière le dispositif de montage et de fixation 17 sur la ferme 2 en U, ou sur la ferme 3 de profilé rectiligne. Elle comporte en outre latéralement deux anneaux 18 de passage des jarretières desservant un empilement de cassettes, avec une ouverture 18A sur l'avant de chaque anneau pour la sortie de la jarretière pour la cassette concernée.

Un emplacement 19 d'accrochage d'un raccord optique 20 est en outre prévu sur la face inférieure de la toile 10, dans le compartiment inférieur 11. Ce raccord optique 20 relie le conducteur 13A du câble 13 au conducteur de jarretière 14, en l'absence de connecteur 16 monté sur sa face avant, ou de préférence à un cordon optique 21 lové avec ce conducteur 13 dans le compartiment 11. Le cordon 21 est par ailleurs raccordé sur la face avant de la cassette à la jarretière 14 par le connecteur avant 16.

Le connecteur 16 est formé de deux demi-connecteurs 16A, 16B par exemple complémentaires et enfichables l'un dans l'autre, montés initialement sur leurs extrémités à raccorder l'une à l'autre du cordon 21 et de la jarretière 14, pour leur raccordement aisé et rapide sur le site d'exploitation. Il constitue une connexion démontable dite de brassage des raccordements.

Le raccord optique 20 est quant à lui réalisé sur site juste avant la mise en place de la cassette dans son empilement. Ce raccord optique constitue une connexion fixe et définitive, ne donnant lieu à aucune modification ultérieure, sauf cas exceptionnel.

Un couvercle 25 est rapporté et fixé par exemple par clip sur la face supérieure du compartiment supérieur 12. Le compartiment inférieur 11 a sa face inférieure laissée ouverte.

Un rebord périphérique 30 saillant sur l'une et l'autre des deux faces de la toile 10, à l'exception du bord avant de sa face supérieure, délimite latéralement les deux compartiments 11 et 12, ferme la face avant 31 du compartiment inférieur mais laisse ouverte toute la face avant 32 du compartiment supérieur 12. Seul l'élément 15 support du connecteur 16 vient faire obstacle dans la face avant du compartiment 12, quand il est en place, et retient la surlongueur de jarretière stockée dans ce compartiment 12.

Dans cette réalisation, la cassette est de 24 mm de hauteur.

Le dispositif de montage et de fixation 17 est formé par deux jeux verticaux de trois pattes d'encliquetage 17A, B, C. Il permet le montage de la cassette sur la ferme 2 en U dont les branches 2A sont à encoches 4, au pas de 16 mm entre elles, ou sur la ferme 3 dont le profilé rectiligne est à deux ailettes latérales 5 et partie médiane nervurée 6.

Ainsi, dans un empilement de cassettes sur la ferme 2 en U, les cassettes individuelles sont alternativement retenues par leurs deux pattes terminales d'encliquetage 17A, 17C, pour l'une des cassettes, et par leur patte médiane d'encliquetage 17B, pour la cassette adjacente, qui sont engagées dans les encoches correspondantes de chaque branche 2A du profilé en U.

Avec cette ferme 2 en U, le câble peut tout aussi bien arriver latéralement ou par l'intérieur du U à l'arrière de l'empilement de cassettes, comme illustré par le câble 13 ou un autre câble 13'.

Dans un empilement de cassettes sur la ferme 3, les cassettes successives sont retenues par leurs deux jeux de pattes sur les bords des ailettes latérales 5 du profilé rectiligne.

Avantageusement, le couvercle 25 du compartiment supérieur 12 présente deux excroissances arrière 25A s'étendant sensiblement de part et d'autre des deux jeux de pattes du dispositif 17, en étant sensiblement à niveau avec la patte supérieure 17A.

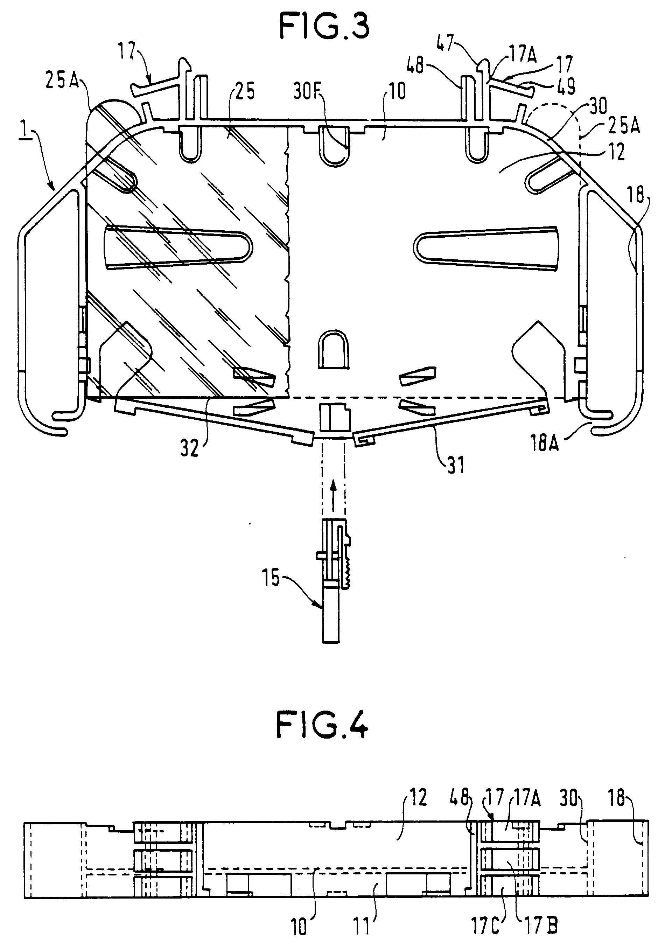

Ce dispositif 17 est précisé en regard des figures 3 et 4.

Il est formé par les deux jeux de trois pattes élastiques d'encliquetage 17A, B, C présentant chacune une dent terminale 47 saillante sur leur face intérieure tournée vers le plan de symétrie de la cassette. Il comporte en outre une patte intérieure rigide 48, de butée, associée à chaque jeu de pattes 17A, 17B, 17C, continue sur la hauteur du jeu et légèrement écartée de lui. Le bord arrière de cette patte de butée est en retrait sur les dents terminales 47 et est chanfreiné en regard des dents terminales.

Cet agencement permet la retenue de la cassette sur la ferme 2, dont les branches 2A du U s'insèrent entre le jeu de pattes d'encliquetage 17 A,B,C et la patte de butée 48 jusqu'à que les dents terminales 47 rentrent dans les encoches 4 correspondantes. Il permet aussi la retenue de cette cassette sur la ferme 3 dont les bords des ailettes 5 s'insèrent entre les dents terminales 47 et le bord arrière de la patte de butée 48.

Les pattes d'encliquetage 17A à C présentent en outre une excroissance importante 49 sur la face extérieure de chacune d'elles, formant levier d'actionnement de la patte élastique d'encliquetage qui la porte. Ce levier 49 est utilisé pour la mise en place de la cassette sur la ferme, mais surtout pour le dégagement des dents terminales des encoches de la ferme 2 et l'extraction de la cassette.

L'excroissance 25A laissée à chaque extrémité du bord arrière du couvercle 25 vient latéralement sensiblement juste au dessus de la patte supérieure d'encliquetage 17A de chaque jeu. Elle permet à l'opérateur de venir positionner en aveugle son doigt sur les seuls leviers d'actionnement des pattes d'encliquetage de la cassette concernée, pour leur désencliquetage.

## Revendications

1. Module unitaire équipé d'un dispositif de montage et de fixation dudit module sur un support de maintien, ledit support de maintien pouvant indifféremment être d'un premier type, formé par un rail en U (2) à deux branches (2A) comportant des encoches (4) régulièrement réparties sur leur longueur, ou d'un deuxième type formé par un rail rectiligne (3), ledit dispositif comportant au moins une paire de pattes élastiques d'encliquetage faisant saillie en regard et à distance l'une de l'autre sur une face dudit module dite arrière de fixation, caractérisé en ce que ledit dispositif comporte plusieurs paires de pattes élastiques d'encliquetage (17A, 17B, 17C), lesdites paires étant situées chacune à un niveau différent sur la face arrière du module et constituant un premier jeu et un deuxième jeu de pattes individuelles d'encliquetage superposées dans chaque jeu et en vis-à-vis deux à deux d'un jeu à l'autre, chacune des pattes d'encliquetage de chacun des deux jeux ayant une dent terminale intérieure (47) tournée vers la patte d'encliquetage de même niveau de l'autre jeu, et les pattes d'encliquetage d'un même jeu ayant entre elles un pas égal à un sous multiple du pas entre les encoches (4) dudit support de maintien du premier type formé par un rail en U (2), et en ce que ledit dispositif comporte en outre deux pattes rigides intérieures (48) faisant saillie sur ladite face arrière entre lesdits deux jeux de pattes d'encliquetage, sur la hauteur de ces deux jeux et respectivement associées à l'un et l'autre de ces deux jeux pour le montage éventuel dudit module sur ledit support de maintien du deuxième type formé par un rail rectiligne.

2. Module unitaire selon la revendication 1, caractérisé en ce que lesdites pattes d'encliquetage (17A-17C) comportent en outre chacune une excroissance extérieure (49) dite levier d'actionnement de la patte d'encliquetage qui la porte.

3. Module unitaire selon l'une des revendications 1 et 2, caractérisé en ce qu'il comporte en outre deux excroissances supplémentaires (25A), s'étendant saillantes sur ladite face arrière de fixation sur l'extérieur des deux jeux de pattes d'encliquetage (17A-17C), respectivement, et sensiblement en regard de l'une des pattes d'encliquetage terminales (17A) de chaque jeu, constituant, pour l'opérateur, un moyen de guidage en aveugle d'actionnement au doigt des seules pattes d'encliquetage de ce module, pour l'extraction de ce seul module empilé avec d'autre modules similaires sur ledit support de maintien (2, 3).

## Patentansprüche

1. Einheitsmodul, der mit einer Vorrichtung zur Montage und zur Befestigung des Moduls auf einem Gestell ausgestattet ist, wobei das Gestell wahlweise aus einer U-förmigen Schiene (2) mit zwei Schenkeln (2A), die gleichmäßig über ihre Länge verteilte Einschnitte (4) aufweisen, oder aus einer geraden Schiene (3) besteht und die Vorrichtung mindestens ein Paar elastischer Rastlaschen aufweist, die in Abstand zueinander über eine rückwärtige Befestigungsseite des Moduls vorstehen, dadurch gekennzeichnet, daß die Vorrichtung mehrere Paare elastischer Rastlaschen (17A, 17B, 17C) aufweist, die sich in unterschiedlichen Höhen auf der Rückseite des Moduls befinden und einen ersten Satz und einen zweiten Satz einzelner Rastlaschen bilden, die in jedem Satz übereinander angeordnet sind und von einem Satz zum anderen paarweise einander gegenüberliegen, wobei jede Rastlasche jedes der beiden Sätze einen zur Rastlasche auf gleicher Höhe des anderen Satzes ausgerichteten inneren Endzahn (47) aufweist und die Laschen des gleichen Satzes untereinander einen Rasterabstand haben, der gleich einem Untervielfachen des Rasterabstands zwischen den Einschnitten (4) im von einer U-förmigen Schiene (2) gebildeten Gestell ist, und daß die Vorrichtung weiter zwei innere steife Laschen (48) aufweist, die auf die Rückseite zwischen den beiden Sätzen von Rastlaschen in Höhe dieser Sätze vorstehen und die je einem dieser beiden Sätze für die eventuelle Montage des Moduls auf dem von einer geraden Schiene gebildeten Gestell zugeordnet sind.

2. Einheitsmodul nach Anspruch 1, dadurch gekennzeichnet, daß die Rastlaschen (17A-17C) außerdem je eine äußere Verlängerung (49) aufweisen, die einen Betätigungshebel für die sie tragende Rastlasche bildet.

3. Einheitsmodul nach einem der Ansprüche 1 und 2, dadurch gekennzeichnet, daß er weiter zwei zusätzliche Ausbuchtungen (25A) aufweist, die auf der rückwärtigen Befestigungsseite an der Außenseite der beiden Sätze von Rastlaschen (17A-17C) vorstehen und sich im wesentlichen vor einer der End-Rastlaschen (17A) jedes Satzes befinden und für den Operator ein Blind-Führungsmittel zum Ansetzen der Finger nur an den Rastlaschen dieses Moduls zur Herausnahme dieses Moduls bilden, der mit anderen ähnlichen Moduln auf dem Gestell (2, 3) gestapelt ist.

## Claims

1. A unitary module fitted with a device for mounting and fixing said module on a holding support, said holding support being either of a first type constituted by a channel section rail (2) having two flanges (2A) including gaps (4) regularly spaced apart along the length thereof, or of a second type formed by a rectilinear rail (3), said device including at least one pair of resilient snap-fastening tabs projecting from a "rear" fixing face of said module so as to face each other and so as to be spaced apart, the module being characterized in that said device comprises a plurality of pairs of resilient snap-fastening tabs (17A, 17B, 17C), each of said pairs being situated at a different level on the rear face of the module and constituting first and second sets of individual superposed snap-fastening tabs in each set, and facing one another in pairs from one set to the other, each of the snap-fastening tabs in each of the two sets having an inner terminal catch (47) directed towards the snap-fastening tab at the same level in the other set, and the snap-fastening tabs within the same set being at a mutual pitch that is equal to a sub-multiple of the pitch of the gaps (4) in said holding support of the first type formed by a channel section rail (2), and in that said device further includes two rigid inner tabs (48) projecting from said rear face between said two sets of snap-fastening tabs to the same extent as said two sets and respectively associated with said two sets to enable said module to be mounted on said holding support of the second type formed by a rectilinear rail.

2. A unitary module according to claim 1, characterized in that each of said snap-fastening tabs (17A-17C) further includes an outwardly-directed projection (49) constituting a lever for actuating the snap-fastening tab that carries it.

3. A unitary module according to claim 1 or 2, characterized in that it further includes two additional projections (25A) that project from said rear fixing face respectively outside the two sets of snap-fastening tabs (17A-17C) and substantially facing one of the terminal snap-fastening tabs (17A) of each set, the projections constituting blind guidance means for the fingers of an operator enabling the operator to actuate only those snap-fastening tabs that belong to said module so as to enable the module to be extracted on its own from a stack of other, similar modules on said holding support (2, 3).
